# EUROPÄISCHE PATENTSCHRIFT

(11) **EP 2 001 776 B1**
(45) Veröffentlichungstag und Bekanntmachung des Hinweises auf die Patenterteilung: **30.12.2009**
(21) Anmeldenummer: 07703512.9
(22) Anmeldetag: 17.02.2007
(51) Int. Cl.: B65G 47/90

(54) **HANDHABUNGSGERÄT ZUM UMPOSITIONIEREN VON TEILEN**
HANDLING UNIT FOR REPOSITIONING PARTS
APPAREIL DE MANIPULATION POUR REPOSITIONNER DES PIECES

(30) Priorität: 31.03.2006 DE 102006014973
(43) Veröffentlichungstag der Anmeldung: 17.12.2008
(73) Patentinhaber: FESTO AG & Co. KG, 73734 Esslingen (DE)
(72) Erfinder: FEYRER, Thomas, 73734 Esslingen (DE)
(74) Vertreter: Abel, Martin
(86) Internationale Anmeldenummer: PCT/EP2007/001385
(87) Internationale Veröffentlichungsnummer: WO 2007/118542

(56) Entgegenhaltungen:
- EP-A- 1 464 596
- DE-A1-102004 004 896

## Beschreibung

Die Erfindung betrifft ein Handhabungsgerät zum Umpositionieren von Teilen,
- mit einem durch eine Antriebseinrichtung zu einer oszillierenden ersten Schwenkbewegung um eine ortsfeste erste Schwenkachse antreibbaren Schwenkarm,
- und mit einem zum Tragen eines Greifers dienenden Handhabungsteil, das unter Ausführung einer zweiten Schwenkbewegung um eine ortsfeste zweite Schwenkachse verschwenkbar und außerdem unter Ausführung einer linearen Hubbewegung quer bezüglich der zweiten Schwenkachse verschiebbar ist, und das über einen Kurvenfolger mit einer sich zumindest ein Stück weit um die zweite Schwenkachse herum erstreckenden Bahnvorgabekurve in Eingriff steht,
- wobei das Handhabungsteil über einen Mitnehmer derart antriebsmäßig mit dem Schwenkarm gekoppelt ist, dass es durch die erste Schwenkbewegung des Schwenkarms zu einer sich aus der zweiten Schwenkbewegung und der linearen Hubbewegung zusammensetzenden Handhabungsbewegung angetrieben wird.

Ein aus der EP 1464596 A2 bekanntes Handhabungsgerät dieser Art ermöglicht ein Umpositionieren von Teilen zwischen zwei Positionen, wobei ein mit einem zum Erfassen der Teile ausgestattetes Handhabungsteil eine Handhabungsbewegung ausführt, die sich aus einer Schwenkbewegung um eine zweite Schwenkachse und einer bezüglich dieser zweiten Schwenkachse radial orientierten linearen Hubbewegung zusammensetzt. Die Antriebskraft wird über einen um eine erste Schwenkachse verschwenkbaren Schwenkarm unter Vermittlung eines Mitnehmers in das Handhabungsteil eingeleitet. Den Bahnverlauf der Handhabungsbewegung gibt eine Bahnvorgabekurve vor, mit der das Handhabungsteil über einen Kurvenfolger in Eingriff steht. Der Kurvenfolger und der ebenfalls am Handhabungsteil angeordnete Mitnehmer - Letzterer greift in einen Mitnahmeschlitz des Schwenkarms ein - sind koaxial zueinander angeordnet.

Das bekannte Handhabungsgerät hat sich als sehr zuverlässig arbeitend herausgestellt. Speziell bei der Umpositionierung schwerer Teile und/oder bei hohen Betriebsgeschwindigkeiten sind die einzelnen Komponenten jedoch relativ stark belastet, sodass die Lagerungen entsprechend groß dimensioniert werden müssen und auch eine relativ große Antriebsleistung zur Verfügung gestellt werden muss. Dies wirkt sich nachteilig auf die Herstellungskosten aus.

Aus der DE 10 2004 004 896 A1 ist ein Handhabungsgerät bekannt, bei dem ein Handhabungsteil über eine Kurbelanordnung zu einer Handhabungsbewegung angetrieben wird. Ein Schwenkteil greift über einen Lagerzapfen an dem mittels eines Schlitzes drehbar und verschiebbar gelagerten Handhabungsteil an, das zusätzlich mittels eines Mitnehmers in einer Bahnvorgabekurve geführt ist.

Der Erfindung liegt die Aufgabe zugrunde, Maßnahmen vorzuschlagen, die ohne Beeinträchtigung der Funktionsfähigkeit eine Kostenreduzierung ermöglichen.

Diese Maßnahmen bestehen bei einem Handhabungsgerät der eingangs genannten Art darin, dass der Kurvenfolger und der Mitnehmer in der Richtung der linearen Hubbewegung auf einander entgegengesetzten Seiten der zweiten Schwenkachse angeordnet sind.

Auf diese Weise liegt eine gegenüber dem Stand der Technik kinematisch günstigere Gestaltung vor. Bedingt durch die Beabstandung von Mitnehmer und Kurvenfolger in Verbindung mit deren Platzierung diesseits und jenseits der zweiten Schwenkachse sind höhere Übersetzungen möglich, sodass ein mit dem Stand der Technik vergleichbares Handhabungsergebnis mit einer geringeren Antriebsleistung realisierbar ist. Dementsprechend reduziert sich auch die Belastung der einzelnen Komponenten, die folglich weniger stark dimensioniert werden müssen, was zu einer Kosteneinsparung führt. Unter Beibehaltung einer entsprechend starken Dimensionierung der Bauteile kann aber auch mit vergleichbarer Antriebsleistung eine höhere Arbeitsgeschwindigkeit erzielt werden. Mit dem Handhabungsgerät lassen sich bei entsprechender Ausgestaltung der Bahnvorgabekurve beispielsweise selbst solche Handhabungen durchführen, bei denen ein Teil um 180° verschwenkt wird. Andere Schwenkwinkel sind bei entsprechend modifiziertem Verlauf der Bahnvorgabekurve aber ebenfalls möglich.

Vorteilhafte Weiterbildungen der Erfindung gehen aus den Unteransprüchen hervor.

Um die Antriebsverbindung zwischen dem Schwenkarm und dem Handhabungsteil zu realisieren, befindet sich der Mitnehmer zweckmäßigerweise am Handhabungsteil und greift derart an dem Schwenkarm an, dass er mit diesem in Richtung der ersten Schwenkbewegung bewegungsgekoppelt ist, während er zugleich in zur ersten Schwenkachse radialer Richtung relativ zum Schwenkarm beweglich ist. Dies ermöglicht eine Übertragung der Antriebskraft unter gleichzeitiger Gewährleistung von Relativbewegungen, die durch den Verlauf der Bahnvorgabekurve bedingt sind.

Eine einfache Realisierungsmöglichkeit für die Antriebsverbindung besteht in der Ausbildung eines sich radial bezüglich der ersten Schwenkachse erstreckenden Mitnahmeschlitzes am Schwenkarm, in den der am Handhabungsteil angeordnete Mitnehmer derart eingreift, dass er zum einen von den Schlitzflanken zur Übertragung einer Antriebskraft beaufschlagbar ist, gleichzeitig aber in der Schlitz-Längsrichtung Relativbewegungen zum Schwenkarm ausführen kann.

Es ist von Vorteil, wenn das Handhabungsteil bei seiner Handhabungsbewegung wenigstens zeitweilig eine reine Schwenkbewegung ohne überlagerte translatorische Bewegung ausführt. Um dies zu erreichen, kann die Bahnvorgabekurve mindestens einen kreisbogenförmigen Kurvenabschnitt aufweisen, dessen Zentrum auf der zweiten Schwenkachse liegt.

Zahlreiche Handhabungsaufgaben machen es erforderlich, das umzupositionierende Teil zu Beginn und/oder zum Ende der Handhabungsbewegung rein linear zu verlagern. Dies gilt beispielsweise für das Entnehmen und/oder Einstecken von Gegenständen aus einer beziehungsweise in eine Aufnahme. Für solche Fälle verfügen ein oder beide Endabschnitte der Bahnvorgabekurve zweckmäßigerweise über einen linearen Verlauf. Dadurch lässt sich insgesamt eine Handhabungs-bewegung des Handhabungsteils realisieren, bei der dieses während eines Zyklus zunächst eine rein lineare Hubbewegung in einer ersten Hubrichtung, anschließend - über einen gewissen Schwenkwinkel hinweg - eine rein schwenkende Zwischenbewegung und schließlich erneut eine rein lineare Hubbewegung, nun allerdings mit bezüglich der ersten Hubbewegung entgegengesetzter Hubrichtung ausführt. Der genannte Schwenkwinkel kann nach Bedarf gewählt werden, wobei insbesondere auch die Möglichkeit zur Realisierung eines Schwenkwinkels von 180° besteht. Auf diese Weise kann ein Gegenstand beispielsweise zwischen sich bezüglich der zweiten Schwenkachse diagonal gegenüberliegenden Positionen umgesetzt werden.

Selbstverständlich kann durch eine entsprechend gestaltete Bahnvorgabekurve auch erreicht werden, dass sich die Handhabungsbewegung zumindest zeitweilig aus überlagerten Schwenk- und Hubbewegungen des Handhabungsteils zusammensetzt.

Um seine lineare Hubbewegung zu ermöglichen, ist das Handhabungsteil zweckmäßigerweise an einer mit geeigneten Linearführungsmitteln ausgestatteten Lagerungseinheit linear verschiebbar gelagert. Die Schwenkbeweglichkeit resultiert dabei aus einer drehbaren Lagerung der Lagerungseinheit selbst, deren Drehachse hierbei die zweite Schwenkachse definiert.

Das Handhabungsteil ist zweckmäßigerweise eine längliche, bevorzugt leistenförmige Komponente. Sie ragt zweckmäßigerweise mit einander entgegengesetzten Endabschnitten auf einander bezüglich der zweiten Schwenkachse diametral entgegengesetzten Seiten über die Lagerungseinheit hinaus. Dem einen Endabschnitt ist hierbei der Kurvenfolger, dem anderen Endabschnitt der Mitnehmer zugeordnet.

Der Kurvenfolger und der Mitnehmer, die in der Richtung der linearen Hubbewegung des Handhabungsteils diesseits und jenseits der zweiten Schwenkachse angeordnet sind, liegen zweckmäßigerweise gemeinsam auf einer die zweite Schwenkachse kreuzenden geraden Linie.

Das Handhabungsgerät kann vom Hersteller schon ab Werk mit einem am Handhabungsteil angeordneten Greifer ausgestattet sein. Zweckmäßig sind Maßnahmen, die eine lösbare und mithin austauschbare Fixierung des Greifers am Handhabungsteil ermöglichen. Am Handhabungsteil kann hierzu eine geeignete Befestigungsschnittstelle vorgesehen sein.

Wie der Mitnehmer, ist auch der Kurvenfolger zweckmäßigerweise rollenförmig ausgebildet, sodass er an der Bahnvorgabekurve reibungsarm abrollen kann.

Besonders zweckmäßig ist eine Ausgestaltung, bei der sich die zweite Schwenkachse zwischen der ersten Schwenkachse und der Bahnvorgabekurve befindet. Hierbei ist die Auslegung der Kinematik insbesondere so getroffen, dass sich der vom Schwenkarm bei der ersten Schwenkbewegung überstrichene Schwenkbereich auf der der zweiten Schwenkachse entgegengesetzten Umfangsseite der ersten Schwenkachse befindet.

Um die Endpositionen des Handhabungsteils exakt vorzugeben, können Anschlagmittel vorhanden sein, die bei Erreichen der betreffenden Endlage wirksam werden. Durch Stoßdämpfmittel kann der Endaufprall abgemildert werden.

Es ist von Vorteil, wenn der zwischen den beiden Endabschnitten der Bahnvorgabekurve um die zweite Schwenkachse herum gemessene Winkel einstellbar ist. Dies ermöglicht insbesondere eine Variation des vom Handhabungsteil während der Handhabungsbewegung überstrichenen Schwenkwinkel. Man kann so das Handhabungsgerät problemlos an die örtlichen Gegebenheiten anpassen. Besonders zweckmäßig ist hierbei eine Ausgestaltung, die eine voneinander unabhängige winkelmäßige Positionierung der beiden Endabschnitte der Bahnvorgabekurve ermöglicht. Das Einstellen des jeweiligen Winkels geschieht vorzugsweise im Rahmen einer Schwenkbewegung mit auf der zweiten Schwenkachse liegendem Schwenkzentrum. Der betreffende Endabschnitt der Bahnvorgabekurve befindet sich hierbei zweckmäßigerweise an einem Kurventräger, der einstellbar an einem Tragkörper angebracht ist, welcher auch die die beiden Schwenkachsen und die die Bahnvorgabekurve definierenden Mittel trägt.

Als Antriebseinrichtung zum Hervorrufen der Schwenkbewegung des Schwenkarms ist insbesondere ein Drehantrieb vorhanden, der entsprechend der vorhandenen Energiequelle entweder elektrisch oder durch Fluidkraft, Letzteres insbesondere pneumatisch, betätigbar ist.

Nachfolgend wird die Erfindung anhand der beiliegenden Zeichnung näher erläutert. In dieser zeigen:
- Figur 1: eine bevorzugte Bauform des erfindungsgemäßen Handhabungsgerätes in perspektivischer Darstellung,
- Figur 2: das Handhabungsgerät aus Figur 1 in einer Vorderansicht mit Blickrichtung gemäß Pfeil II, wobei das Handhabungsteil in einer Zwischenstellung gezeigt ist und wobei ein an dem Handhabungsteil angeordneter Greifer strichpunktiert angedeutet ist; zusammen mit einem ergriffenen Gegenstand,
- Figur 3: eine Seitenansicht des Handhabungsgerätes mit Blickrichtung gemäß Pfeil III aus Figur 2,
- Figur 4: eine Rückansicht des Handhabungsgerätes mit Blickrichtung gemäß Pfeil IV aus Figur 3,
- Figur 5: erneut eine Vorderansicht des Handhabungsgerätes, allerdings unter Weglassung von Komponenten, sodass die die Bahnvorgabekurve definierenden Mittel besser sichtbar sind, und
- Fig. 6 bis 11: den Bewegungsablauf bei der Durchführung eines Handhabungszyklus des Handhabungsgerätes.

Das erfindungsgemäße Handhabungsgerät ermöglicht ein aufeinanderfolgendes Umpositionieren von Teilen beliebiger Art. Bei diesen Teilen handelt es sich beispielsweise um Werkstücke, die während eines Montageprozesses umpositioniert werden müssen. In der Zeichnung ist ein umzupositionierendes Teil strichpunktiert bei 2 angedeutet.

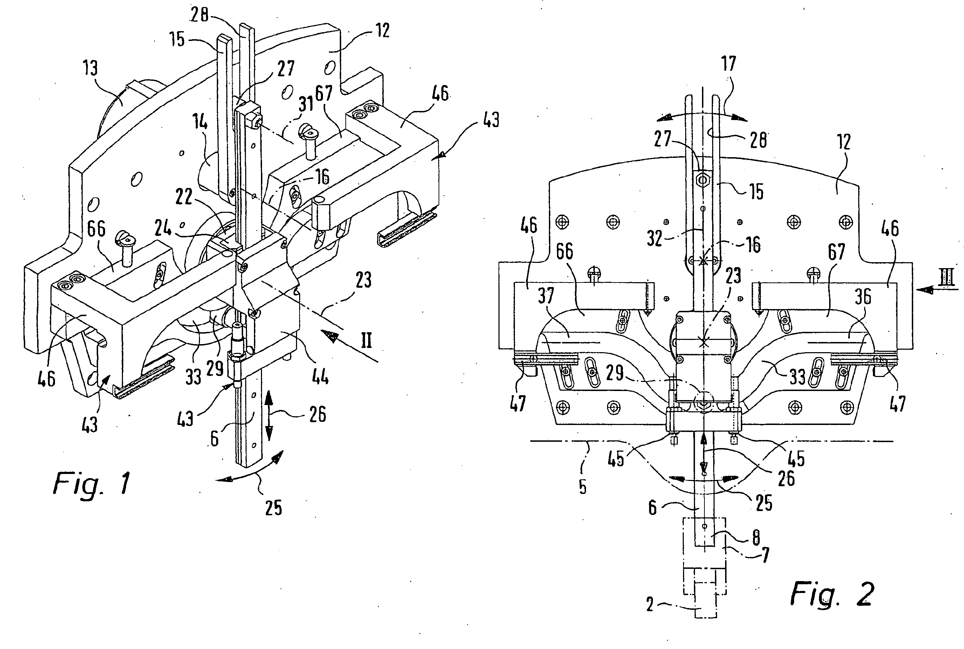

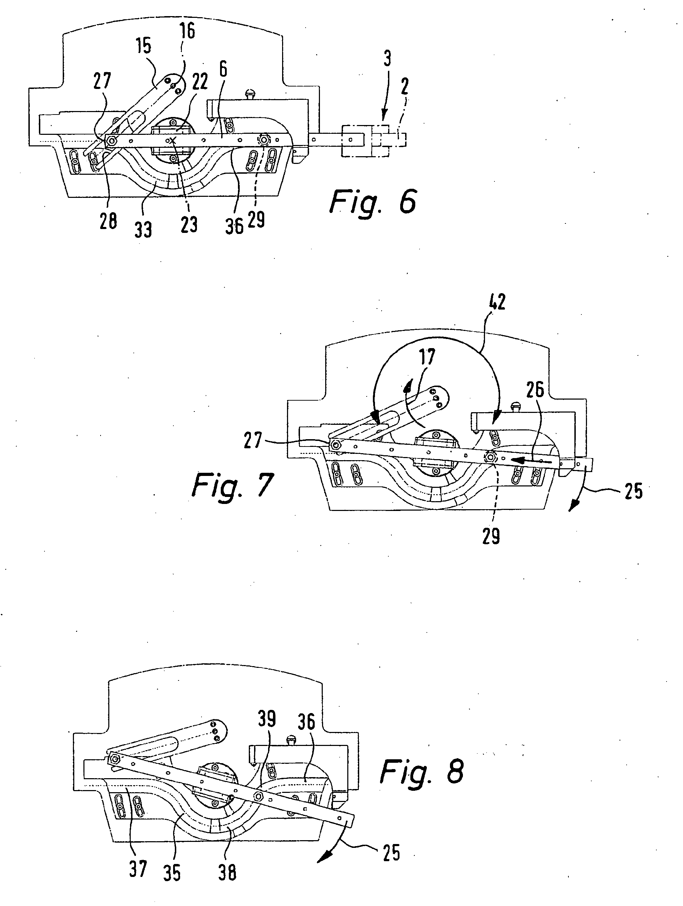

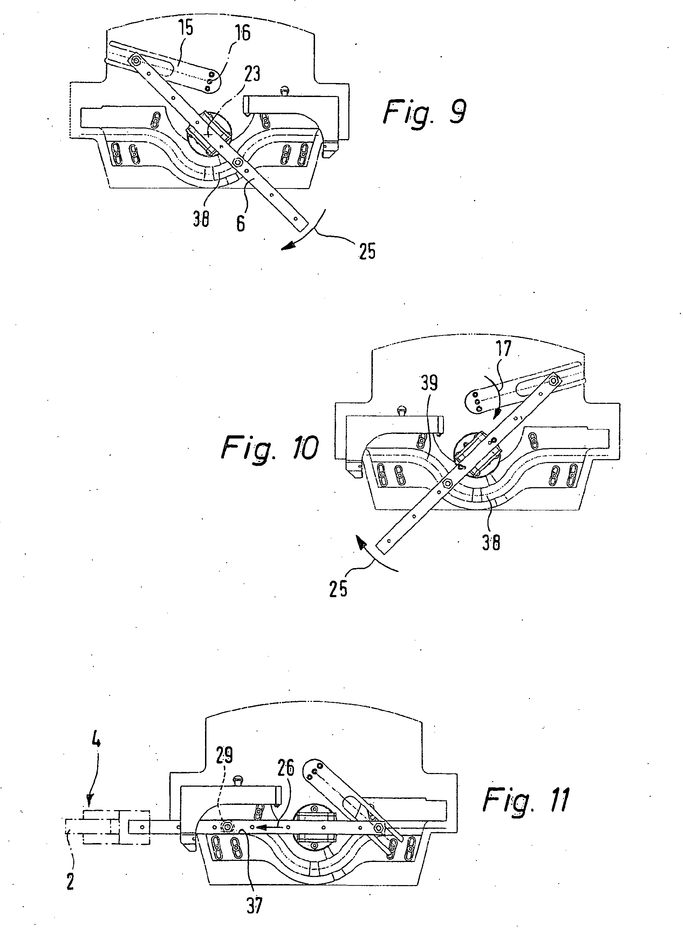

Das Handhabungsgerät ist so ausgelegt, dass das Teil 2 während eines Umpositioniervorganges zwischen einer in Figur 6 angedeuteten ersten Endposition 3 und einer in Figur 11 angedeuteten zweiten Endposition 4 verlagerbar ist, wobei die dabei von ihm durchlaufene Bahnkurve dem Verlauf einer in Figur 2 strichpunktiert angedeuteten Handhabungsbahn 5 entspricht. Die Handhabungsbahn 5 ist diejenige Bewegungsbahn, die ein angetriebenes Handhabungsteil 6 bei Ausführung einer motorisch erzeugten Handhabungsbewegung durchläuft. Das Handhabungsteil 6 verfügt über eine geeignete Befestigungsschnittstelle 8, an der an ihm ein zum lösbaren Halten des umzupositionierenden Teils 2 dienender Greifer 7 einer geeigneten Bauart, bevorzugt lösbar, angebracht ist.

Bei dem Greifer 7 handelt es sich beispielsweise um einen zangenartigen Greifer, der über verschwenkbare oder parallel verschiebbare Greifbacken verfügt, die sich elektrisch oder auch durch Fluidkraft betätigen lassen, um ein Teil 2 nach Bedarf festzuhalten oder loszulassen. Weitere mögliche Ausführungsformen für den Greifer 7 wären beispielsweise Sauggreifer oder Magnetgreifer, die das handzuhabende Teil 2 durch Unterdruck oder durch Magnetkraft festhalten können.

Das Handhabungsgerät enthält als Basis einen bevorzugt plattenförmigen Tragkörper 12, an den rückseitig eine insbesondere von einem einzigen fluidbetätigten Drehantrieb gebildete Antriebseinrichtung 13 angebaut ist. Eine Antriebswelle 14 der Antriebseinrichtung 13 durchsetzt den Tragkörper 12 und trägt in drehfester Weise einen im Bereich der Vorderseite des Tragkörpers 12 angeordneten, in radialer Richtung von ihr wegragenden Schwenkarm 15.

Bei dem Drehantrieb kann es sich auch um einen elektrischen Drehantrieb handeln, insbesondere einen direkt oder unter Zwischenschaltung eines Getriebes angebauten Elektromotor.

Durch Aktivierung der Antriebseinrichtung 13 lässt sich die Antriebswelle 14 zu einer hin und her gehenden Drehbewegung um ihre Längsachse antreiben, wobei diese Längsachse gleichzeitig die als erste Schwenkachse 16 bezeichnete Schwenkachse des an der Antriebswelle angeordneten Schwenkarms 15 bildet. Dieser Schwenkarm 15 führt bei der geschilderten Drehbewegung der Antriebswelle 14 eine oszillierende erste Schwenkbewegung 17 um die erste Schwenkachse 16 aus.

Das Handhabungsteil 6, bei dem es sich zweckmäßigerweise um ein längliches, bevorzugt leisten- oder schienenförmiges Bauteil handelt, ist an einer beispielhaft im Wesentlichen klotzförmigen Lagerungseinheit 22 linear verschiebbar gelagert. Die relativ zu der Lagerungseinheit 22 ausführbare Bewegung des Handhabungsteils 6 sei im Folgenden als lineare Hubbewegung bezeichnet, die bei 26 durch einen Doppelpfeil angedeutet ist. Die Lagerungseinheit 22 ist mit Linearführungsmitteln 24 ausgestattet - beispielsweise Gleitlagermittel oder Wälzlagermittel -, an denen das Handhabungsteil 6 in seiner Längsrichtung verschiebbar gelagert und in Querrichtung dazu abgestützt ist. Die Linearführungsmittel 24 können das Handhabungsteil 6 beispielsweise klammerartig umgreifen und mit einander entgegengesetzten längsseitigen Flanken des Handhabungsteils 6 in Führungseingriff stehen.

Unter Vermittlung der Lagerungseinheit 22 ist das Handhabungsteil 6 zudem um eine zur ersten Schwenkachse 16 parallel verlaufende und mit Abstand zu dieser ersten Schwenkachse 16 angeordnete zweite Schwenkachse 23 verschwenkbar bezüglich des Tragkörpers 12 gelagert. Diese Schwenklagerung resultiert daraus, dass die Lagerungseinheit 22 um eine die zweite Schwenkachse 23 definierende Drehachse an dem Tragkörper 12 drehgelagert ist. Von der Lagerungseinheit 22 kann rückseitig eine Lagerungswelle 20 wegragen, die in einer am Tragkörper 12 angeordneten Drehlagereinrichtung 21 drehbar gehalten ist.

Zusätzlich zu der linearen Hubbewegung 26 kann das Handhabungsteil 6 somit auch noch eine als zweite Schwenkbewegung 25 bezeichnete Schwenkbewegung um die zweite Schwenkachse 23 ausführen. Die beiden Schwenkachsen 16, 23 sind bezüglich des Tragkörpers 12 jeweils ortsfest, behalten also ihre gegenseitige Zuordnung stets konstant bei.

Die lineare Hubbewegung 26 verläuft bezüglich der zweiten Schwenkachse 23 radial. Es ist möglich, dass das Handhabungsteil 6 so bewegt wird, dass sich seine zweite Schwenkbewegung 25 mit der linearen Hubbewegung 26 überlagert.

An dem Handhabungsteil 6 ist ein Kurvenfolger 29 angeordnet, der mit einer sich zumindest ein Stück weit entlang des Umfanges der zweiten Schwenkachse 23 erstreckenden Bahnvorgabekurve 33 in Führungseingriff steht. Der Kurvenfolger 29 ist zweckmäßigerweise von einem wälzgelagerten Rollenkörper gebildet, der mit geringfügigem Spiel in einen die Bahnvorgabekurve 33 bildenden Längsschlitz 35 eingreift. Vorzugsweise ist die Bahnvorgabekurve 33 an bezüglich des Tragkörpers 12 gesonderten Kurventrägern 66, 67 ausgebildet, die an die vordere Plattenfläche 30 des Tragkörpers 12 angebaut sind, der das Handhabungsteil 6 und der Schwenkarm 15 mit Abstand vorgelagert sind.

Alternativ könnte die Bahnvorgabekurve 33 auch unmittelbar an oder in dem Tragkörper 12 ausgebildet sein.

Der Kurvenfolger 29 sitzt zweckmäßigerweise an der dem Tragkörper 12 zugewandten Seite des Handhabungsteils 6 und ragt von dort aus in den sich zu ihm hin öffnenden Längsschlitz 35. Dieser, und somit auch die Bahnvorgabekurve 33, erstrecken sich in einer zu der zweiten Schwenkachse 23 rechtwinkeligen Ebene.

Durch den Führungseingriff zwischen Kurvenfolger 29 und Bahnvorgabekurve 33 wird die Handhabungsbahn 5 vorgegeben. Das Handhabungsteil 6 bewegt sich entlang dieser Handhabungsbahn 5, wenn es durch den Schwenkarm 15 entsprechend angetrieben wird.

Um diese Antriebsverbindung zu realisieren, steht das Handhabungsteil 6 über einen Mitnehmer 27 mit dem Schwenkarm 15 in antriebsmäßiger Verbindung. Diese ist so ausgelegt, dass das Handhabungsteil 6 durch die erste Schwenkbewegung des Schwenkarms 15 zu einer der Handhabungsbahn 5 folgenden Handhabungsbewegung angetrieben wird, die sich aus der zweiten Schwenkbewegung 25 und der linearen Hubbewegung 26 zusammensetzt. In Abhängigkeit vom Verlauf der Bahnvorgabekurve 33 kann die Handhabungsbewegung zumindest zeitweilig aus allein der zweiten Schwenkbewegung 25 oder allein der linearen Hubbewegung 26 bestehen, oder kann sich zumindest zeitweilig aus einer Überlagerung dieser beiden Bewegungen 25, 26 zusammensetzen.

Um die Antriebsverbindung zu realisieren, ist an dem Handhabungsteil 6, insbesondere an seiner dem Tragkörper 12 zugewandten Seite, der schon erwähnte Mitnehmer 27 angeordnet, der mit dem Schwenkarm 15 in Mitnahmeeingriff steht. Hierzu verfügt der Schwenkarm 15 über einen sich radial bezüglich der ersten Schwenkachse 16 erstreckenden linearen Mitnahmeschlitz 28, in den der vorzugsweise rollenförmig ausgebildete und zweckmäßigerweise bezüglich des Tragkörpers 12 drehbar gelagerte Mitnehmer 27 eingreift. Handhabungsteil 6 und Schwenkarm 15 sind dabei um die zur ersten Schwenkachse 16 parallele Mitnehmerachse 31 relativ zueinander verschwenkbar. Außerdem kann sich der Mitnehmer 27 längs des Längsschlitzes 35 bewegen, wobei er von den Schlitzflanken abgestützt wird.

Aus der Zeichnung ist ersichtlich, dass der Mitnahmeschlitz 28 an dem von der ersten Schwenkachse 16 wegweisenden äußeren Ende offen sein kann, sodass der Schwenkarm 15 insgesamt eine gabelartige Formgebung aufweist.

Wenn der Schwenkarm 15 zu seiner ersten Schwenkbewegung 17 angetrieben wird, überträgt er mit der jeweils in Schwenkrichtung weisenden Schlitzflanke seines Längsschlitzes 35 eine Antriebskraft auf den Mitnehmer 27, was aufgrund der Beabstandung zwischen dem Mitnehmer 27 und der zweiten Schwenkachse 23 eine Schwenkbewegung des Handhabungsteils 6 hervorruft. Eine besonders vorteilhafte Kinematik ergibt sich dadurch, dass der Kurvenfolger 29 und der Mitnehmer 27 in der Richtung der linearen Hubbewegung 26 auf einander entgegengesetzten Seiten der zweiten Schwenkachse 23 angeordnet sind. Es ist insbesondere vorgesehen, dass der Mitnehmer 27 und der Kurvenfolger 29 auf einer die zweite Schwenkachse 23 kreuzenden geraden Linie 32 liegen.

Der Greifer 7 beziehungsweise die Befestigungsschnittstelle 8 für die Befestigung eines Greifers 7 liegt zweckmäßiger-weise mit Bezug zur zweiten Schwenkachse 23 auf der gleichen Seite wie der Kurvenfolger 29. Vorzugsweise befindet sich die zweite Schwenkachse 23 in der Richtung der geraden Linie 32 zwischen der ersten Schwenkachse 16 und der Bahnvorgabekurve 33.

Der Verlauf der Bahnvorgabekurve 33 orientiert sich an der zu lösenden Umpositionierungsaufgabe. Das erfindungsgemäße Handhabungsgerät gestattet es, Handhabungsbahnen 5 vorzugeben, die über lineare Endabschnitte verfügen. Dadurch kann das jeweilige Teil 2 im Rahmen einer linearen Bewegung aufgenommen und auch wieder abgesetzt werden. Dies ist vorteilhaft, wenn ein Teil beispielsweise aus einer bohrungsartigen Aufnahme herausgezogen beziehungsweise in eine solche hineingesteckt werden soll.

Um eine solche Handhabungsbahn 5 zu erhalten, besitzen die beiden Endabschnitte 36, 37 der Bahnvorgabekurve 33 jeweils einen linearen Verlauf. Ihre Längsrichtungen verlaufen dabei zweckmäßigerweise quer zur zweiten Schwenkachse 23. Zwischen den beiden Endabschnitten 36, 37 erstreckt sich ein kreisbogenförmiger Kurvenabschnitt 38, dessen konkaver Bereich der zweiten Schwenkachse 23 zugewandt ist, wobei sein Zentrum zweckmäßigerweise exakt auf der zweiten Schwenkachse 23 liegt. Über je einen entgegengesetzt gekrümmten Übergangsabschnitt 39 geht der Kurvenabschnitt 38 sanft in die beiden linearen Endabschnitte 36, 37 über.

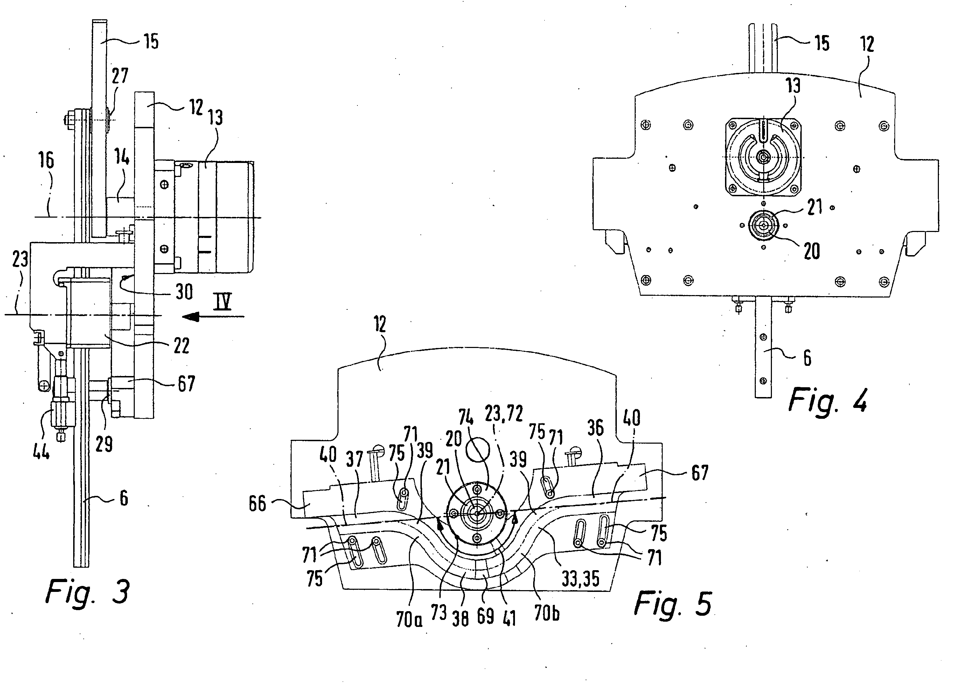

Die linearen Endabschnitte 36, 37 sind vorzugsweise so ausgerichtet, dass ihre Längsachsen 40 die zweite Schwenkachse 23 kreuzen. Gut ersichtlich ist dies vor allem aus Figur 5.

Bei der gezeigten Ausgestaltung und Anordnung der Bahnvorgabekurve 33 sind die beiden linearen Endabschnitte 36, 37 so angeordnet, dass ihre Längsachsen 40 zusammenfallen. Dies führt letztlich dazu, dass sich die beiden linearen Endabschnitte der Handhabungsbahn 5 exakt diametral gegenüberliegen. Ein solcher Verlauf der Handhabungsbahn ist für viele Umpositionierungen von Teilen 2 vorteilhaft.

Es besteht allerdings auch die Möglichkeit, die Bahnvorgabekurve 33 so auszugestalten, dass ihre linearen Endabschnitte 36, 37 unter einem von 1800 abweichenden Winkel zueinander verlaufen. Dieser Winkel, im Folgenden als Neigungswinkel 41 bezeichnet, ist so zu verstehen, dass er mit der zweiten Schwenkachse 23 als Zentrum gemessen wird.

Bei dem geschilderten Ausführungsbeispiel besteht zudem die vorteilhafte Möglichkeit zu einer variablen.Vorgabe des Neigungswinkels 41 (Figur 5). Hierzu sind die beiden schon erwähnten Kurventräger 66, 67 bezüglich des Tragkörpers 12 verstellbar angeordnet, wobei jeder der beiden Kurventräger 66, 67 einen der beiden linearen Endabschnitte 36, 37 und einen der beiden Übergangsabschnitte 39 trägt, sowie einen Teilabschnitt des kreisbogenförmigen Kurvenabschnittes 38. Der Übergangsbereich zwischen den beiden an den zwei Kurventrägern 66, 67 ausgebildeten Bahnvorgabekurvenabschnitten 70a, 70b ist bei 69 ausgewiesen.

Bevorzugt sind die beiden insbesondere plattenförmig ausgebildeten Kurventräger 66, 67 an die vordere Plattenfläche 30 des Tragkörpers 12 angesetzt und dort mittels Klemmschraube 71 in der eingestellten Position lösbar bezüglich des Tragkörpers 12 fixiert.

Die beiden Kurventräger 66, 67 sind unabhängig voneinander um ein und dasselbe Schwenkzentrum 72 verschwenkbar, das mit der zweiten Schwenkachse 23 zusammenfällt. Auf diese Weise ist gewährleistet, dass sich die Lage des gemeinsamen Treffpunktes der beiden Längsachsen 40 auf der zweiten Schwenkachse 23 ungeachtet der getroffenen Winkeleinstellung nicht verändert.

Damit unabhängig von der getroffenen Winkeleinstellung ein ungestörter Übergang zwischen den sich aneinander anschließenden Bahnvorgabekurvenabschnitten 70a, 70b gewährleistet ist, können die beiden Kurventräger 66, 67 so ausgebildet sein, dass sie sich in dem Übergangsbereich 69, abhängig von der getroffenen Winkeleinstellung, mehr oder weniger weit überlappen.

Die Schwenklagerung der Kurventräger 66, 67 kann durch Kreisbogenführungsmittel 73 realisiert werden, deren Zentrum in dem Schwenkzentrum 72 liegt. Sie bestehen zweckmäßigerweise aus kreisbogenförmig konkav konturierten Oberflächen an der der zweiten Schwenkachse 23 zugewandten Seite der Kurventräger 66, 67, die an einer komplementär konvex gekrümmten Führungsfläche anliegen. Letztere ist beim Ausführungsbeispiel von der kreiszylindrischen Außenumfangsfläche eines die Lagerungswelle 20 umgebenden, am Tragkörper 12 fixierten Flanschkörpers 74 gebildet.

Um die Winkeleinstellung zu ermöglichen, sind die Kurventräger 66, 67 mit bogenförmigen Langlöchern 75 versehen, durch die die Klemmschrauben 71 hindurchgreifen.

Bei dem gezeigten Ausführungsbeispiel besteht durch die Verstellbarkeit der Kurventräger 66, 67 die Möglichkeit, die beiden linearen Endabschnitte 36, 37 der Bahnvorgabekurve 33 relativ zueinander so zu platzieren, dass der Neigungswinkel 41 im Bereich zwischen 160° und 220° liegt.

Für andere Anwendungsfälle kann anstelle zweier linearer Endabschnitte 36, 37 auch nur ein linearer Endabschnitt vorhanden sein. Zudem kann auch gänzlich auf lineare Kurvenverläufe verzichtet werden, wenn dies der Anwendungsfall erfordert. Beispielsweise kann die Bahnvorgabekurve 33 durchweg einen bogenförmigen Verlauf haben, mit entweder gleichbleibender oder sich verändernder Krümmung.

Beim Ausführungsbeispiel ist die Anordnung insgesamt so getroffen, dass der vom Schwenkarm 15 bei der ersten Schwenkbewegung 17 überstrichene Schwenkbereich 42 auf der der zweiten Schwenkachse 23 entgegengesetzten Umfangsseite der ersten Schwenkachse 16 liegt. Dieser Umstand lässt sich recht anschaulich aus den Figuren 6 bis 11 entnehmen. Diese Figuren zeigen auch verschiedene Phasen eines Handhabungszyklus, bei dem das Handhabungsteil 6 die Handhabungsbahn 5 einmal durchläuft.

Im Ausgangszustand gemäß Figur 6 ist das bevorzugt Längserstreckung aufweisende Handhabungsteil 6 horizontal orientiert. Der Kurvenfolger 29 befindet sich am Ende des ersten linearen Endabschnittes 36. Ausgehend hiervon durchläuft das Handhabungsteil 6 zunächst einen linearen Abschnitt der Bewegungsbahn 5, bis der Kurvenfolger 29 in den sich an den ersten linearen Endabschnitt 36 anschließenden Übergangsabschnitt 39 der Bahnvorgabekurve 33 übergeht. Ab diesem Moment ergibt sich gemäß Figur 7 eine der linearen Hubbewegung 26 überlagerte zweite Schwenkbewegung 25 für das Handhabungsteil 6. Ist der Kurvenfolger 29 gemäß Figuren 8, 9 und 10 in den kreisbogenförmigen Kurvenabschnitt 38 eingefahren, bleibt sein Abstand zur zweiten Schwenkachse 23 bis zum Erreichen des gegenseitigen, austrittsseitigen Übergangsabschnittes 39 konstant. Hierbei besteht die Handhabungsbewegung aus einer reinen zweiten Schwenkbewegung 25.

Hieran schließt sich dann, während des Durchlaufens des ausgangsseitigen Übergangsabschnittes 39, wieder eine sich aus einer überlagerten Schwenkbewegung und Hubbewegung zusammensetzende Handhabungsbewegung an, bis der Handhabungszyklus gemäß Figur 11 letztlich wieder durch einen rein linearen Bewegungsablauf des Handhabungsteils 6 endet, wenn der Kurvenfolger 29 den zweiten linearen Endabschnitt 37 bis zu seinem Ende hin durchläuft.

Bei diesem Bewegungsablauf sorgen die Schlitzflanken des Mitnahmeschlitzes 28 des sich verschwenkenden Schwenkarmes 15 für den notwendigen Vortrieb. Die Stellen der Kraftübertragung wandern dabei in Abhängigkeit vom momentanen Schwenkwinkel des Schwenkarmes 15 längs des Mitnahmeschlitzes 28.

Vorzugsweise ist das Handhabungsgerät auch mit Anschlagund/oder Stoßdämpfmitteln 43 ausgestattet, die bei Erreichen mindestens einer Endlage der Handhabungsbewegung des Handhabungsteils 6 wirksam sind.

Exemplarisch ist dies dadurch gelöst, dass an dem Handhabungsteil 6 ein Träger 44 angeordnet ist, der mit fluidischen Stoßdämpfern 45 bestückt ist, die gleichzeitig als Anschlagelemente fungieren. Im Bereich der beiden Endabschnitte 36, 37 der Bahnvorgabekurve 33 ist jeweils ein ortsfest am Tragkörper 12 angeordnetes Anschlagelement 46 befestigt, das in die Bewegungsbahn der Stoßdämpfer 45 ragt. Nähert sich das Handhabungsteil 6 einer Endlage an, treffen die Stoßdämpfer 45 auf das zugeordnete Anschlagelement 46, sodass die Geschwindigkeit verringert wird, bis letztlich die Anschlagfunktion der Stoßdämpfer 4 - insbesondere durch die Stoßdämpfergehäuse hervorgerufen - wirksam wird.

Bei 47 sind noch Halterungen ersichtlich, die an den Anschlagelementen 46 angebracht sind und an denen nicht näher dargestellte Sensoren fixierbar sind, die ansprechen, wenn das Handhabungsteil 6 die zugeordnete Endlage erreicht. Auf der Basis der.Sensorsignale kann die Betätigung der Antriebseinrichtung 13 gesteuert werden.

Das Handhabungsteil 6 ragt beim Ausführungsbeispiel mit einander entgegengesetzten Endabschnitten auf einander entgegengesetzten Seiten über die Lagerungseinheit 22 hinaus. An dem einen Endabschnitt sitzt der Kurvenfolger 29 und an dem anderen Endabschnitt der Mitnehmer 27. Der Abstand dieser Komponenten 29, 27 von der zweiten Schwenkachse 23 variiert beim Durchlaufen der Handhabungsbahn 5. Der Träger 44 ist zweckmäßigerweise im Bereich der zweiten Schwenkachse 23 an dem Handhabungsteil 6 so fixiert, dass er dessen Handhabungsbewegung mitmacht.

Dadurch, dass die zweite Schwenkachse 23 zwischen dem Kurvenfolger 29 und dem Mitnehmer 27 platziert ist, ergeben sich besonders günstige Hebelverhältnisse mit einer relativ hohen Übersetzung bei der Kraftübertragung zwischen dem Schwenkarm 15 und dem Handhabungsteil 6.

Die gesamte für die Handhabungsbewegung des Handhabungsteils 6 verantwortliche Betätigungskraft wird über den Mitnehmer 27 vom Schwenkarm 15 auf das Handhabungsteil 6 übertragen. Entsprechend der momentanen Phase der Handhabungsbewegung wirkt diese Betätigungskraft zunächst ziehend und anschließend drückend auf das Handhabungsteil 6 ein. Kurvenfolger 29, Mitnehmer 27 und zweite Schwenkachse 23 liegen zweckmäßigerweise unabhängig von der momentanen Position des Handhabungsteils 6 stets auf der schon erwähnten geraden Linie 32. Beim Durchlaufen eines kreisbogenförmigen Kurvenabschnittes 38 bleiben die Abstände zwischen der zweiten Schwenkachse 23 und einerseits dem Mitnehmer 27 sowie andererseits dem Kurvenfolger 29 konstant. Bewegt sich der Kurvenfolger 29 auf einem bezüglich der zweiten Schwenkachse 23 nicht konzentrischen Kurvenabschnitt, findet die lineare Hubbewegung 26 für sich allein oder in Überlagerung der zweiten Schwenkbewegung 25 statt, wobei sich die Abstände von Mitnehmer 27 und Kurvenfolger 29 zur zweiten Schwenkachse 23 verändern. Nähert sich der Mitnehmer 27 an die zweite Schwenkachse 23 an, entfernt sich der Kurvenfolger 29 von der zweiten Schwenkachse 23 gleichzeitig in gleichem Maße, und umgekehrt.

## Patentansprüche

1. Handhabungsgerät zum Umpositionieren von Teilen (2),
- mit einem durch eine Antriebseinrichtung (13) zu einer oszillierenden ersten Schwenkbewegung (17) um eine ortsfeste erste Schwenkachse (16) antreibbaren Schwenkarm (15),
- und mit einem zum Tragen eines Greifers (7) dienenden Handhabungsteil (6), das unter Ausführung einer zweiten Schwenkbewegung (25) um eine ortsfeste zweite Schwenkachse (23) verschwenkbar und außerdem unter Ausführung einer linearen Hubbewegung (26) quer bezüglich der zweiten Schwenkachse (23) verschiebbar ist, und das über einen Kurvenfolger (29) mit einer sich zumindest ein Stück weit um die zweite Schwenkachse (23) herum erstreckenden Bahnvorgabekurve (33) in Eingriff steht,
- wobei das Handhabungsteil (6) über einen Mitnehmer (27) derart antriebsmäßig mit dem Schwenkarm (15) gekoppelt ist, dass es durch die erste Schwenkbewegung (17) des Schwenkarms (15) zu einer sich aus der zweiten Schwenkbewegung (25) und der linearen Hubbewegung (26) zusammensetzenden Handhabungsbewegung angetrieben wird,
**dadurch gekennzeichnet,**
**dass** der Kurvenfolger (29) und der Mitnehmer (27) in der Richtung der linearen Hubbewegung (26) auf einander entgegengesetzten Seiten der zweiten Schwenkachse (23) angeordnet sind.

2. Handhabungsgerät nach Anspruch 1, **dadurch gekennzeichnet, dass** der Mitnehmer (27) an dem Handhabungsteil (6) angeordnet ist und derart an dem Schwenkarm (15) angreift, dass er mit diesem in Richtung der ersten Schwenkbewegung (17) bewegungsgekoppelt ist und zugleich in zur ersten Schwenkachse (16) radialer Richtung relativ zu dem Schwenkarm (15) beweglich ist.

3. Handhabungsgerät nach Anspruch 1 oder 2, **dadurch gekennzeichnet, dass** der Schwenkarm (15) einen sich radial bezüglich der ersten Schwenkachse (16) erstreckenden Mitnahmeschlitz (28) aufweist, in den der zweckmäßigerweise rollenförmig ausgebildete Mitnehmer (27) in Schlitz-Längsrichtung bewegbar und durch die Schlitzflanken beaufschlagbar eingreift.

4. Handhabungsgerät nach einem der Ansprüche 1 bis 3, **dadurch gekennzeichnet, dass** die Bahnvorgabekurve (33) mindestens einen kreisbogenförmigen Kurvenabschnitt (38) aufweist, dessen Zentrum auf der zweiten Schwenkachse (23) liegt.

5. Handhabungsgerät nach einem der Ansprüche 1 bis 4, **dadurch gekennzeichnet, dass** einer oder beide Endabschnitte (36, 37) der Bahnvorgabekurve (33) einen linearen Verlauf haben, derart, dass die Handhabungsbewegung ausschließlich aus der linearen Hubbewegung (26) besteht, wenn sich der Kurvenfolger (29) längs eines linearen Endabschnittes (36, 37) bewegt.

6. Handhabungsgerät nach Anspruch 5, **dadurch gekennzeichnet, dass** bei Vorhandensein zweier linearer Endabschnitte (36, 37) der Bahnvorgabekurve (33) zwischen diesen beiden linearen Endabschnitten (36, 37) ein Winkel im Bereich von 160° bis 220° und vorzugsweise von 180° vorliegt, wobei diese beiden linearen Endabschnitte Zweckmäßigerweise mit zusammenfallenden Längsachsen (40) angeordnet sind.

7. Handhabungsgerät nach einem der Ansprüche 5 oder 6, **dadurch gekennzeichnet, dass** die Längsachse (40) wenigstens eines linearen Endabschnittes (36, 37) der Bahnvorgabekurve (33) die zweite Schwenkachse (23) kreuzt.

8. Handhabungsgerät nach einem der Ansprüche 1 bis 7, **dadurch gekennzeichnet, dass** das Handhabungsteil (6) zur Ausführung der linearen Hubbewegung (26) an einer Lagerungseinheit (22) linear verschiebbar gelagert ist, die ihrerseits zur Definition der zweiten Schwenkachse (23) drehbar gelagert ist, wobei zweckmäßigerweise das Handhabungsteil (6) mit einander entgegengesetzten Endabschnitten auf einander entgegengesetzten Seiten über die Lagerungseinheit (22) hinausragt, wobei dem einen Endabschnitt der Kurvenfolger (29) und dem anderen Endabschnitt der Mitnehmer (27) zugeordnet ist.

9. Handhabungsgerät nach einem der Ansprüche 1 bis 8, **dadurch gekennzeichnet, dass** der Mitnehmer (27) und der Kurvenfolger (29) auf einer die zweite Schwenkachse (23) kreuzenden geraden Linie (32) liegen, wobei zweckmäßigerweise an dem bezüglich der zweiten Schwenkachse (23) auf der gleichen Seite wie der Kurvenfolger (29) angeordneten Abschnitt des Handhabungsteils (6) ein Greifer (7) oder eine Befestigungsschnittstelle (8) für einen Greifer (7) angeordnet ist.

10. Handhabungsgerät nach einem der Ansprüche 1 bis 9, **dadurch gekennzeichnet, dass** die Bahnvorgabekurve (33) schlitzartig ausgebildet ist.

11. Handhabungsgerät nach einem der Ansprüche 1 bis 10, **dadurch gekennzeichnet, dass** der Kurvenfolger (29) rollenförmig ausgebildet ist.

12. Handhabungsgerät nach einem der Ansprüche 1 bis 11, **dadurch gekennzeichnet, dass** sich die zweite Schwenkachse (23) zwischen der ersten Schwenkachse (16) und der Bahnvorgabekurve (33) befindet, wobei sich der vom Schwenkarm (15) bei der ersten Schwenkbewegung (17) überstrichene Schwenkbereich (42) zweckmäßigerweise auf der der zweiten Schwenkachse (23) entgegengesetzten Umfangsseite der ersten Schwenkachse (16) befindet.

13. Handhabungsgerät nach einem der Ansprüche 1 bis 12, **gekennzeichnet durch** Anschlagmittel und/oder Stoßdämpfmittel (43), die wirksam sind, wenn das Handhabungsteil das Ende der Handhabungsbewegung erreicht.

14. Handhabungsgerät nach einem der Ansprüche 1 bis 13, **dadurch gekennzeichnet, dass** der zwischen den beiden Endabschnitten (36, 37) der Bahnvorgabekurve (33) um die zweite Schwenkachse (23) herum gemessene Winkel (41) einstellbar ist.

15. Handhabungsgerät nach einem der Ansprüche 1 bis 14, **dadurch gekennzeichnet, dass** wenigstens einer und zweckmäßigerweise jeder der beiden Endabschnitte (36, 37) der Bahnvorgabekurve (33) um ein auf der zweiten Schwenkachse (23) liegendes Schwenkzentrum (72) relativ zum jeweils anderen Endabschnitt verschwenkbar und in unterschiedlichen Winkelstellungen positionierbar ist.

16. Handhabungsgerät nach einem der Ansprüche 1 bis 15, **gekennzeichnet durch** einen insbesondere plattenförmigen Tragkörper (12), der die die beiden Schwenkachsen (16, 23) und die die Bahnvorgabekurve (33) definierenden Mittel trägt.

17. Handhabungsgerät nach Anspruch 16 in Verbindung mit Anspruch 15, **dadurch gekennzeichnet, dass** die beiden Endabschnitte (36, 37) der Bahnvorgabekurve (33) an separaten, unabhängig voneinander bezüglich des Tragkörpers (12) verstellbaren Kurventrägern (66, 67) angeordnet sind.

18. Handhabungsgerät nach einem der Ansprüche 1 bis 17, **dadurch gekennzeichnet, dass** die Antriebseinrichtung (13) ein durch Fluidkraft oder elektrisch betätigbarer Drehantrieb ist.

## Claims

1. Handling device for the repositioning of components (2)
- with a pivot arm (15) which may be driven by a drive unit (13) to make an oscillating first pivoting movement (17) around a stationary first pivot axis (16),
- and with a handling part (6), serving to support a gripper (7), which may be swivelled in the course of a second pivoting movement (25) around a stationary second pivot axis (23), and may also be moved in the course of a linear stroke movement (26) at right-angles to the second pivot axis (23), and which engages via a curve follower (29) with a path presetting curve (33) extending at least a short distance around the second pivot axis (23),
- wherein the handling part (6) is so coupled to the pivot arm (15) for driving purposes via a driver (27) that it is driven by the first pivoting movement (17) of the pivot arm (15) to make a handling movement comprising the second pivoting movement (25) and the linear stroke movement (26),
**characterised in that**
the curve follower (29) and the driver (27) are arranged on opposite sides of the second pivot axis (23) in the direction of the linear stroke movement (26).

2. Handling device according to claim 1, **characterised in that** the driver (27) is mounted on the handling part (6) and acts on the pivot arm (15) in such a way that it is movement-coupled with the latter in the direction of the first pivoting movement (17), and at the same time may be moved relative to the pivot arm (15) in the direction radial to the first pivot axis (16).

3. Handling device according to claim 1 or 2, **characterised in that** the pivot arm (15) has a driver slot (28), extending radially with respect to the first pivot axis (16), in which the driver (27) - expediently in the form of a roller - may be moved in the longitudinal direction of the slot, acting with pressure through the slot sides.

4. Handling device according to any of claims 1 to 3, **characterised in that** the path presetting curve (33) has at least one circular curve section (38), the centre of which lies on the second pivot axis (23).

5. Handling device according to any of claims 1 to 4, **characterised in that** one or both end sections (36, 37) of the path presetting curve (33) have a linear course, such that the handling movement consists solely of the linear stroke movement (26) when the curve follower (29) moves along a linear end section (36, 37).

6. Handling device according to claim 5 **characterised in that**, in the event of there being two linear end sections (36, 37) of the path presetting curve (33), there is between these two linear end sections (36, 37) an angle in the range of 160° to 220° and preferably 180°, wherein these two linear end sections are expediently arranged with coinciding longitudinal axes (40).

7. Handling device according to one of claims 5 or 6, **characterised in that** the longitudinal axis (40) of at least one linear end section (36, 37) of the path presetting curve (33) intersects the second pivot axis (23).

8. Handling device according to any of claims 1 to 7, **characterised in that** to execute the linear stroke movement (26) the handling part (6) is mounted with linear movement capability on a bearing unit (22), which in turn is mounted rotatably to define the second pivot axis (23), wherein expediently the handling part (6) extends with opposite end sections out over the bearing unit (22) on opposite sides, wherein the curve follower (29) is assigned to one end section and the driver (27) to the other end section.

9. Handling device according to any of claims 1 to 8, **characterised in that** the driver (27) and the curve follower (29) lie on a straight line (32) intersecting the second pivot axis (23), wherein expediently a gripper (7) or a mounting interface (8) for a gripper (7) is provided on the section of the handling part (6) located on the same side as the curve follower (29), with reference to the second pivot axis (23).

10. Handling device according to any of claims 1 to 9, **characterised in that** the path presetting curve (33) is slot-like in form.

11. Handling device according to any of claims 1 to 10, **characterised in that** the curve follower (29) is in the form of a roller.

12. Handling device according to any of claims 1 to 11, **characterised in that** the second pivot axis (23) is located between the first pivot axis (16) and the path presetting curve (33), wherein the pivoting section (42) covered by the pivot arm (15) during the first pivoting movement (17) is expediently located on the peripheral side of the first pivot axis (16) opposite the second pivot axis (23).

13. Handling device according to any of claims 1 to 12, **characterised by** stop means and/or shock absorber means (43) which are effective when the handling part reaches the end of the handling movement.

14. Handling device according to any of claims 1 to 13, **characterised in that** the angle (41) between the two end sections (36, 37) of the path presetting curve (33), measured around the second pivot axis (23), is adjustable.

15. Handling device according to any of claims 1 to 14, **characterised in that** at least one and expediently both of the two end sections (36, 37) of the path presetting curve (33) may be pivoted relative to the other respective end section around a pivot centre (72) lying on the second pivot axis (23), and may be positioned at different angular settings.

16. Handling device according to any of claims 1 to 15, **characterised by** a support body (12), in particular plate-shaped, which carries the means defining the two pivot axes (16, 23) and the path presetting curve (33).

17. Handling device according to claim 16 in conjunction with claim 15, **characterised in that** the two end sections (36, 37) of the path presetting curve (33) are located on separate curve supports (66, 67), adjustable relative to the support body (12) independently of one another.

18. Handling device according to any of claims 1 to 17, **characterised in that** the drive unit (13) is a rotary drive actuable by fluid power or electrically.

## Revendications

1. Appareil de manipulation pour repositionner des pièces (2),
- avec un bras pivotant (15) pouvant être entraîné par un dispositif d'entraînement (13) en un premier mouvement de pivotement oscillant (17) autour d'un premier axe de pivotement fixe (16),
- et avec un élément de manipulation (6) servant à porter un préhenseur (7) et qui peut pivoter autour d'un deuxième axe de pivotement fixe (23) en éxécutant un deuxième mouvement de pivotement (25) et être déplacé en plus transversalement par rapport au deuxième axe de pivotement (23) en réalisant un mouvement d'avance linéaire (26) et qui est en prise avec une piste de came (33) s'étendant sur au moins une certaine distance autour du deuxième axe de pivotement (23) par le biais d'un suiveur de came (29),
- dans lequel l'élément de manipulation (6) est couplé en entraînement avec le bras pivotant (15) par le biais d'un entraîneur (27) de telle sorte qu'il est entraîné par le premier mouvement de pivotement (17) du bras pivotant (15) en un mouvement de manipulation se composant du deuxième mouvement de pivotement (25) et du mouvement d'avance linéaire (26),
**caractérisé en ce que**
le suiveur de came (29) et l'entraîneur (27) sont disposés dans la direction du mouvement d'avance linéaire (26) sur des côtés opposés l'un à l'autre du deuxième axe de pivotement (23).

2. Appareil de manipulation selon la revendication 1, **caractérisé en ce que** l'entraîneur (27) est agencé au niveau de l'élément de manipulation (6) et s'applique contre le bras pivotant (15) de telle sorte qu'il est couplé dynamiquement avec celui-ci dans la direction du premier mouvement de pivotement (17) tout en étant mobile dans la direction radialle au premier axe de pivotement (16) par rapport au bras pivotant (15).

3. Appareil de manipulation selon la revendication 1 ou 2, **caractérisé en ce que** le bras pivotant (15) présente une fente d'entraînement (28) s'étendant radialement par rapport au premier axe de pivotement (16), dans laquelle l'entraîneur (27) réalisé de manière avantageurse sous forme de galet est en prise de manière mobile dans la direction longitudinale de la fente et de manière sollicitable par les flancs de la fente.

4. Appareil de manipulation selon l'une des revendications 1 à 3, **caractérisé en ce que** la piste de came (33) présente au moins une section de came (38) en arc, dont le centre se trouve sur le deuxième axe de pivotement (23).

5. Appareil de manipulation selon l'une des revendications 1 à 4, **caractérisé en ce que** l'une ou les deux sections d'extrémité (36, 37) de la piste de came (33) ont un tracé linéaire tel que le mouvement de manipulation se compose exclusivement du mouvement d'avance linéaire (26), lorsque le suiveur de came (29) se déplace le long d'une section d'extrémité linéaire (36, 37).

6. Appareil de manipulation selon la revendication 5, **caractérisé en ce qu'**en présence de deux sections d'extrémité linéaires (36, 37) de la piste de came (33), il y existe, entre ces deux sections d'extrémité linéaires (36, 37), un angle situé dans la plage allant de 160° à 220° et de préférence de 180°, ces deux sections d'extrémité linéaires étant agencées de manière avantageuse avec leurs axes longitudinaux (40) en coïncidente.

7. Appareil de manipulation selon l'une des revendications 5 ou 6, **caractérisé en ce que** l'axe longitudinal (40) d'au moins une section d'extrémité linéaire (36, 37) de la piste de came (33) croise le deuxième axe de pivotement (23).

8. Appareil de manipulation selon l'une des revendications 1 à 7, **caractérisé en ce que** l'élément de manipulation (6) est monté de manière linéairement mobile sur une unité de guidage (22) pour exécuter le mouvement d'avance linéaire (26), laquelle est montée de son côté de manière rotative pour définir le deuxième axe de pivotement (23), l'élément de manipulation (6) dépassant de manière avantageuse de l'unité de guidage (22) par des sections d'extrémité opposées l'une à l'autre sur des côtés opposés l'un à l'autre, le suiveur de came (29) étant associé à une section d'extrémité et l'entraîneur (27) à l'autre section d'extrémité.

9. Appareil de manipulation selon l'une des revendications 1 à 8, **caractérisé en ce que** l'entraîneur (27) et le suiveur de came (29) se trouvent sur une ligne droite (32) croisant le deuxième axe de pivotement (23), un preneur (7) ou une interface de fixation (8) pour un preneur (7) étant agencé de manière appropriée au niveau de la section de l'élément de manipulation (6) agencée du même côté, par rapport au deuxième axe de pivotement (23), que le suiveur de came (29).

10. Appareil de manipulation selon l'une des revendications 1 à 9, **caractérisé en ce que** la piste de came (33) est réalisée sous forme de fente.

11. Appareil de manipulation selon l'une des revendications 1 à 10, **caractérisé en ce que** le suiveur de came (29) est réalisé sous forme de galet.

12. Appareil de manipulation selon l'une des revendications 1 à 11, **caractérisé en ce que** le deuxième axe de pivotement (23) se trouve entre le premier axe de pivotement (16) et la piste de came (33), la plage de pivotement (42) couverte par le bras pivotant (15) lors du premier mouvement de pivotement (17) se trouvant de manière appropriée du côté périphérique du premier axe de pivotement (16), opposé au deuxième axe de pivotement (23).

13. Appareil de manipulation selon l'une des revendications 1 à 12, **caractérisé par** des moyens de butée et/ou des moyens d'amortissement des chocs (43) qui sont actifs lorsque l'élément de manipulation atteint la fin du mouvement de manipulation.

14. Appareil de manipulation selon l'une des revendications 1 à 13, **caractérisé en ce que** l'angle (41) mesuré autour du deuxième axe de pivotement (23) entre les deux sections d'extrémité (36, 37) de la piste de came (33) est réglable.

15. Appareil de manipulation selon l'une des revendications 1 à 14, **caractérisé en ce qu'**au moins une et de manière appropriée chacune des deux sections d'extrémité (36, 37) de la piste de came (33) peut pivoter autour d'un centre de pivotement (72) situé sur le deuxième axe de pivotement (23) respectivement par rapport à l'autre section d'extrémité et peut être positionnée dans différentes positions angulaires.

16. Appareil de manipulation selon l'une des revendications 1 à 15, **caractérisé par** un corps support (12) en particulier en forme de plaque qui porte les moyens définissant les deux axes de pivotement (16, 23) et les moyens définissant la piste de came (33).

17. Appareil de manipulation selon la revendication 16 en liaison avec la revendication 15, **caractérisé en ce que** les deux sections d'extrémité (36, 37) de la piste de came (33) sont agencées au niveau de supports de came (66, 67) séparés, réglables indépendamment l'un de l'autre par rapport au corps support (12).

18. Appareil de manipulation selon l'une des revendications 1 à 17, **caractérisé en ce que** le dispositif d'entraînement (13) est un entraînement rotatif pouvant être actionné par force fluidique ou électriquement.
